# EUROPEAN PATENT SPECIFICATION

(11) **EP 0 798 071 B1**
(45) Date of publication and mention of the grant of the patent: **16.10.2002**
(21) Application number: 97200902.1
(22) Date of filing: 25.03.1997
(51) Int. Cl.: B23P 21/00, B23Q 7/14

(54) **Installation for processing gas cylinder valves**
Einrichtung zur Bearbeitung von Gasflaschenventilen
Installation pour le traitement de robinets de bouteilles de gaz

(30) Priority: 28.03.1996 FR 9603866
(43) Date of publication of application: 01.10.1997
(73) Proprietor: SHELL INTERNATIONALE RESEARCH MAATSCHAPPIJ B.V., 2596 HR Den Haag (NL)
(72) Inventor: Pompei, Philippe, c/o Butagaz SNC, 92200 Neuilly Sur Seine (FR)

(56) References cited:
- EP-A- 0 223 683
- EP-A- 0 593 246
- FR-A- 2 543 468
- US-A- 4 268 945

## Description

The invention relates to an installation for processing gas cylinder valves, each valve comprising a collar extended, on the side opposite to an operating knob, by a threaded end for attachment to a gas cylinder.

The installation relates more especially to processing LPG (Liquefied Petroleum Gas) gas cylinder valves.

For reasons of safety, it is essential that the valves used on such gas cylinders are in perfect condition and ensure the desired gas-tightness. It is therefore necessary to process and check these valves, whether they have already been used or are in new condition, in order to comply with security requirements.

To date, the processing and gas-tightness testing operations of valves are relatively long and necessitate a relatively significant human intervention. This results in not inconsiderable costs. Furthermore, the reliability of processing carried out needs to be improved.

It is an object of the invention to provide a processing installation which avoids the above inconveniences and which enables processing and reliable checking of valves, with minimum human intervention.

To this end the installation according to the present invention for processing gas cylinder valves, wherein each valve comprises an operating knob and a collar arranged on the side opposite to the operating knob provided with a threaded end for attaching the valve to a cylinder, which installation includes a conveyor circuit for routing the valves towards one or several processing devices, which conveyor circuit comprises a horizontal mobile conveyor surface on which individual valve holders are positioned, each valve holder comprising a plate for receiving the collar of a valve to be conveyed, which plate is provided with a bore for the passage of the threaded end, the valve holder furthermore comprises support means for the plate which support means rest on the conveyor surface and hold the plate at an elevation such that, during normal operation, the lower extremity of the threaded end is held above the conveyor surface.

Such an installation enables a position to be maintained, for the valves to be processed, which facilitates the automatic working of processes at various processing stations.

The invention will now be described by way of example in more detail with reference to the accompanying drawings, wherein
Figure 1 is a schematic top view, on a reduced scale, of an installation for processing LPG gas cylinder valves;
Figure 2 is vertical sectional view with external parts, on a larger scale, of a valve holder with a valve held by the valve holder;
Figure 3 is a view from above in relation to Figure 2;
Figure 4 is a schematic vertical sectional view of the pneumatic clamping device of each processing station;
Figure 5 is a vertical sectional schematic view, with external parts, of a cleaning device for brushing the threaded end and the seating of the calibration inset;
Figure 6 is a vertical sectional schematic view of a device for fitting a self-clamping joint;
Figure 7 is a vertical sectional schematic view of a gas-tightness testing device, checking the gas-tightness of a valve in open position;
Figure 8 shows similarly to Figure 7, the gas-tightness testing device, checking the gas-tightness of the valve in closed position;
Figure 9 is a vertical sectional schematic view of a device for marking a valve which passed the gas-tightness test;
Figure 10 is a vertical sectional schematic view of a device for fitting a flow regulator;
Figure 11 is a simplified vertical section, with external parts, of a rotational drive mechanism for the valve operating knob;
Figure 12 is a schematic top view of a variant of the installation as shown in Figure 1;
Figure 13 is a schematic view of a variant of the cleaning device for brushing the threaded end and the seating of the calibration inset;
Figure 14 is a vertical sectional schematic view of a variant of the device for fitting a self-clamping joint;
Figure 15 is a vertical sectional schematic view of a variant of the flow regulator fitting device, in a first configuration; and
Figure 16 shows a variant of Figure 15 in another configuration.

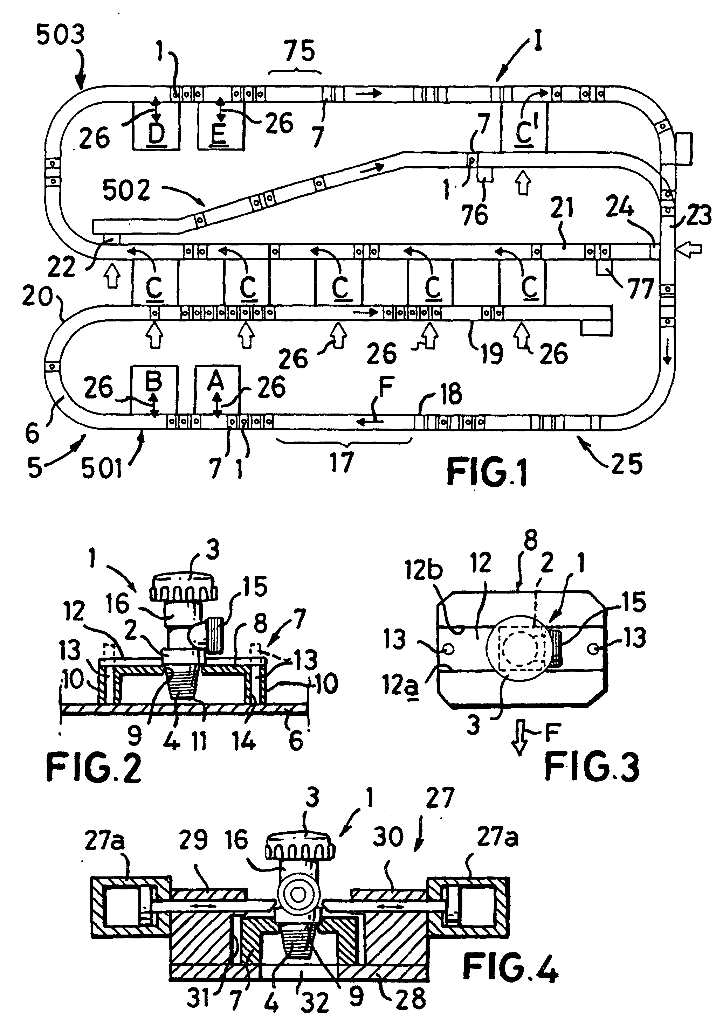

Reference is now made to Figures 1 to 3 showing the installation I according to the present invention for processing valves 1 for LPG gas cylinders (not shown). Each valve 1 comprises a valve housing provided with an operating knob 3 and a collar 2 arranged on the side opposing that of the operating knob 3. The collar 2 is provided with a threaded end 4 in the shape of a truncated cone, for attaching the valve 1 on to an LPG gas cylinder. The threaded end 4 will, henceforth, be called a "tapered threaded connector". The collar 2 has a square contour as shown in Figure 3.

Each valve 1 comprises a valve housing 16, provided with an outlet opening 15, which is arranged perpendicular to the tapered threaded connector 4.

The installation I (Figure 1) comprises a conveyor circuit 5 for routing the valves 1 towards one or several processing devices situated in processing stations A, B, C, C', D and E placed on a side of the conveyor circuit 5. The conveyor circuit 5 has a horizontal mobile conveyor surface 6 consisting for example of a conveyor belt on which the individual valve holders 7 are positioned.

Each valve holder 7 comprises a plate 8 for receiving the collar 2 of a valve 1 to be conveyed, this plate comprises a bore 9 for the passage of the tapered threaded connector 4. The valve holder 7 furthermore comprises support means consisting of legs 10 destined to rest on the horizontal mobile conveyor surface 6 and to hold the plate 8 horizontally at an elevation such that, during normal operation, the lower extremity 11 of the tapered threaded connector 4 is situated above the horizontal mobile conveyor surface 6, without touching the surface 6. The valve 1 is thus conveyed in a vertical position as shown in Figure 2.

The upper face of each plate 8 has an indexing means in the bore 9 to turn the valve 1 in the bore 9 to a predetermined direction. The indexing means consists of a groove 12 (Figure 3) whose longitudinal edges 12a and 12b come into contact with two opposite faces of the square collar 2. Seen from above, the plate 8 has an approximately rectangular shape whose large dimension is orthogonal to the direction of forward movement of the plate 8 in the conveyor circuit, represented by the arrow F (Figure 3).

Each valve holder 7 comprises a result indicator which comprises at least one pin 13 slidably mounted, with a slight friction, in a vertical bore 14 arranged in a leg 10 of the valve holder. Preferably two pins 13 are provided in the valve holder 7, disposed symmetrically in relation to a central axis parallel to the direction of forward movement of the valve holder 7, which is in the direction of the large sides of the contour of the plate 8, as shown in Figure 3. The presence of these two pins 13 enables positioning errors of the valve holder 7 to be avoided in the conveyor circuit 5. The result indicator consisting of the pin 13 can adopt two positions, a first position in which the pin 13 is totally retracted in the vertical bore 14 in the leg 10 and a second position in which the pin 13 is projecting upwards out of the vertical bore 14 as shown in dashed lines in Figure 2. The pin 13 remains in this position by friction against the wall of the bore 14. The status or condition of the result indicator is associated with these positions of the pin 13: good or bad, as the result of a gas-tightness test to which the valve 1 is subjected. The use of the result indicator will be discussed in more detail further on.

The valves 1 to be processed and checked are loaded manually, by one or several operators, on to the plates 8, in a loading area 17 (Figure 1) of the conveyor circuit 5.

It should be noted that the valves 1 carried by the valve holders 7 are in the "upright" position, they are correctly directed and they have a good stability during the movements and operations.

The conveyor circuit 5, such as represented in Figure 1, consists of three elementary circuits 501, 502 and 503.

The first circuit 501 comprises two parallel branches 18 and 19 interconnected by a curved part 20 which is substantially semicircular. The first circuit 501 further includes a third branch 21 which is positioned parallel to the second branch 19. The transfer of valve holders with valves from the second branch 19 to the third branch 21 is carried out at the processing stations C which will be discussed further on.

The second circuit 502 extends from a first shunt 22 situated at the downstream of the branch 21 to an additional processing station C'.

The third circuit 503 connects to the downstream end of the branch 21 at the first shunt 22 and proceeds to the additional processing station C'. Via a branch 23 the third circuit 503 proceeds to a second shunt 24 situated at the upstream extremity of the branch 21. The circuit 503 proceeds until it connects in an unloading area 25 to the upstream extremity of the first circuit 501.

As previously indicated, the processing stations A, B, C, C', D and E are placed on one side of the conveyor circuit 5. Each processing station comprises displacement means 26, schematically shown in Figure 1 by means of arrows, for removing the valve holder 7 with valve 1 from the conveyor circuit 5 and for placing it in the processing station and, after processing, for removing the valve holder 7 with valve 1 from the processing station and placing it back on the conveyor circuit 5. By way of non-restrictive example, these displacement means 26 can comprise a jack whose axis is oriented transversely to the direction of forward movement F, for transfer between the conveyor circuit and the processing station and vice versa.

Each of the processing stations A, B, C, C', D and E is equipped with pneumatic clamping device 27 schematically shown in Figure 4.

The clamping device 27 comprises a bearing plate 28, situated near the conveyor circuit 5, on one side of it. Two guiding blocks 29 and 30 arranged opposite to each other so as to define a channel 31 into which the valve holder 7 is inserted by a displacement perpendicular to the direction F. The blocks 29 and 30 are separated from each other in order to allow the passage of the housing 16 of the valve 1. The bearing plate 28 preferably comprises a central hole 32 above which the tapered threaded connector 4 is located. On each guiding bloc 29 and 30 a pneumatic clamping jack 27a is mounted whose axis is oriented parallel to the direction F.

The rod of each clamping jack 27a comes to act, with is outer extremity, on one side of the square collar 2, preferably with a chamfered end which ensures the blockage of the valve holder 7 with valve 1 with the application of a descending vertical component that presses the valve holder 7 on to the bearing plate 28.

In all the processing stations, the valve holder 7 with valve 1 is held by a clamping unit similar to that represented in Figure 4.

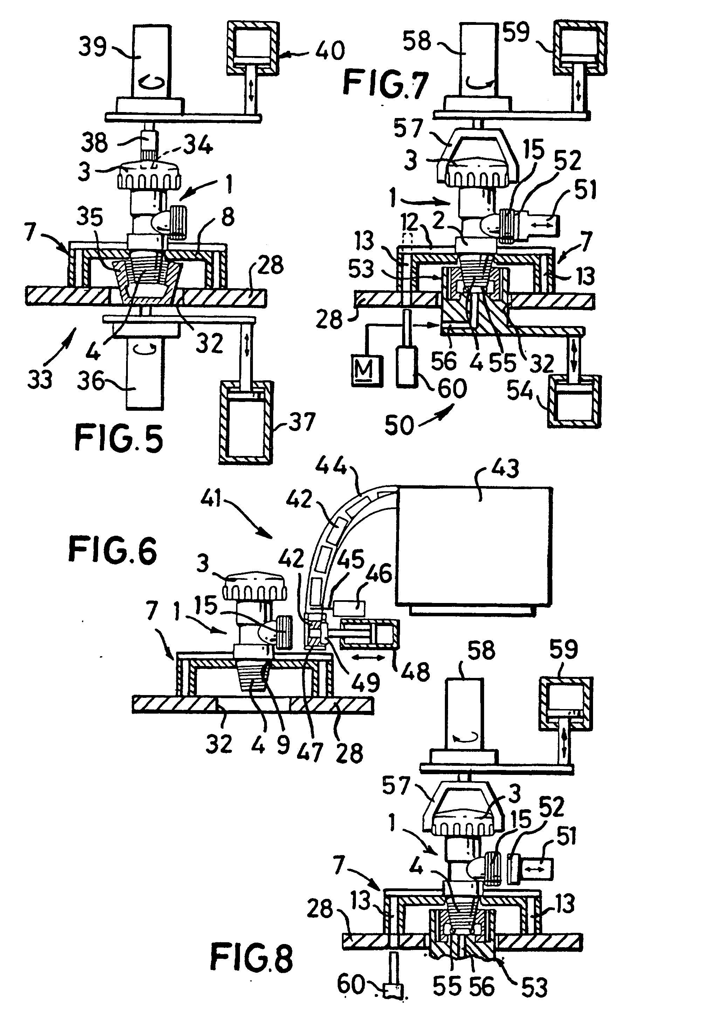

Figure 5 shows a cleaning device 33 in particular for cleaning the tapered threaded connector 4 by brushing. The cleaning device can also clean a seating 34 arranged in the upper side of the operating knob 3, for a calibration inset. The cleaning device 33 is installed at processing station A (Figure 1).

The brushing device 33 comprises a lower brush 35 adapted for covering the tapered threaded connector 4 which is pressed between the bristles of the brush 35. The lower brush 35 can be driven rotatably round a vertical axis by a motor 36, in particular a pneumatic motor. The elevation of the unit of motor 36 and lower brush 35 is adjustable by a jack 37. The lower brush 35 traverses the central hole 32 of the bearing plate 28.

A vertical brush 38, whose bristles are directed downwards, is provided for entering into the seating 34 and cleaning it. A motor 39, in particular pneumatic, drives the vertical brush 38 around a vertical axis. The elevation of the unit of vertical brush 38 and motor 39 is adjustable by a jack 40.

When the brushing operations have been effected, the valve holder with valve is ejected from the processing station A to be placed back on the conveyor circuit 5 and taken to the next processing station B (Figure 1) which is equipped with a device 41 for fitting a self-clamping joint 42, shown in Figure 6. The valve holder 7 with valve 1 is inserted by transverse movement into the processing station B and immobilized by the pneumatic clamping device, not shown.

The self-clamping joints 42 are stored in a vibrating bowl 43 and routed up to the entrance of a chute 44. A sliding gate 45, operated by a jack 46, ensures the supply to a receptacle 47 joint by joint. The positioning of the valve holder 7 and of the valve 1 in the processing station B is such that the receptacle 47 is opposite the outlet opening 15 of the valve 1, and in the axis of this outlet opening 15. A jack 48 operates the movement in translation, in the direction of the axis of the outlet opening 15, of an end piece 49 adapted for collecting the self-clamping joint 42 situated in the receptacle 47, and for placing it inside the outlet opening 15.

This operation having been effected, the valve holder with valve is ejected from the processing station B, placed back on the conveyor circuit 501 and conveyed to the following processing station C.

At the processing station C a gas-tightness test of the valve will be carried out. The processing time is relatively long, about 30 seconds for example, greater than the processing time of the other stations. In order to ensure a sufficient rate, several processing stations C are advantageously provided, five in the example shown in Figure 1. The processing stations C can be positioned in series between the two parallel branches 19 and 21 of the conveyor circuit 5. The processing stations C therefore provide a processing of several valves in parallel. As variant, the processing stations C could be positioned on a carousel (not shown).

The processing stations C work independently of each other in order to supply the following processing stations correctly with valves.

As for the preceding stations, the valve holder with valve is inserted into a processing station C and immobilized by a pneumatic clamping unit. For clarity we will use the expression "gas-tightness testing station" to refer to processing station C.

The processing will consist of two gas-tightness tests, one in which the valve 1 is open (knob 3 in open position), the other in which valve 1 is closed so that the communication between the outlet opening 15 and the tapered threaded connector 4 is normally cut off.

The gas-tightness testing device 50 comprises shutting means for shutting the outlet opening in the form of a retractable pneumatic plunger 51 having an impermeable end piece 52 which can shut the outlet opening 15, as shown in Figure 7, for the gas-tightness test of the open valve 1.

A connector 53, whose elevation is controlled by a jack 54, traverses the central hole 32 and tightly connects to the tapered threaded connector 4, under the plate 8. An O-ring 55 is pressed between the lower transverse face of the tapered threaded connector 4 and a bearing face of the connector 53. There is furthermore provided a source for injecting gas under pressure in the form of pipe 56 of the connector 53, exiting in the centre of the O-ring 55. The other end of the pipe 56 is connected to a source (not shown) for injecting gas under pressure, which is controlled by means of an electronic measuring circuit M. This electronic measuring circuit M is adapted to inject air at a controlled low pressure (approximately 10⁵ Pa or 1 bar) through the pipe 56 into the valve 1, through the inlet opening in the tapered threaded connector 4. The electronic measuring circuit M is suitably a leakage detector acting on pressure variations, adapted to deliver a signal representative of the detection of a leakage when a fall in pressure larger than a predetermined threshold is detected over a predetermined duration.

There is also provided a rotational drive mechanism comprising a rotatable clamp 57 for opening or closing the valve 1 by rotating the operating knob 3. The rotatable clamp 57 is driven rotatably in one direction or in the other by a pneumatic motor 58, in particular pneumatic, of vertical axis, the adjustment of the elevation of the unit is provided by a jack 59.

In the first gas-tightness test, the valve 1 is open (Figure 7). To this end, after positioning of the rotatable clamp 57 on the operating knob 3, the motor 58 drives the clamp 57 in the direction of opening the valve schematised by an arrow on the motor 58. A clutch can be provided for the rotational connection between the clamp 57 and the motor 58, in such a way as to limit the drive torque, in particular in case of stopping of the operating knob 3.

When this operating knob 3 is in the position corresponding to the valve 1 being open, the air at controlled low pressure is injected through the pipe 56. After a stabilisation time, the electronic measuring circuit M determines whether there has been a leakage by detection of a pressure drop in the valve. The precision of measurement is of the order of 0.03 g/h.

If the test is positive, in other words if a leakage is detected, the different parts of the gas-tightness testing station, namely the retractable pneumatic plunger 51, the rotatable clamp 57 and the connector 53 are retracted such as in the initial position.

One of the pins 13, for example the one situated on the opposite side of the outlet opening 15 of the valve 1, is raised in order to project upwards as shown in dotted lines in Figure 7, by a manipulator in the form of the rod of a jack 60 traversing a hole provided in the bearing plate 28 and operated by the electronic measuring circuit M for leakage detection.

The valve holder 7 with valve 1 is then removed from the gas-tightness testing station C on the branch 21 (Figure 1). When the valve holder 7 with the pin 13 projecting upwards arrives at the first shunt 22, it will be recognised as holding a valve 1 that has failed the gas-tightness test and will be shunted to the second circuit 502.

If the test carried out as shown in Figure 7, with valve 1 being open, is negative, in other words, if no leakage has been detected valve open, a second gas-tightness test, shown in Figure 8, is effected wherein the valve 1 is shut.

For that, the rotatable clamp 57 for driving the operating knob 3 is put into rotation in opposite direction by the motor 58 to shut the valve 1 and normally cut off all communication between the opening of the tapered threaded connector 4 and the outlet opening 15. The connector 53 remains tightly connected to the tapered threaded connector 4, but the retractable pneumatic plunger 51 and its impermeable end piece 52 are separated from the outlet opening 15.

In this configuration, the electronic measuring circuit M carries out a test in the same manner as previously explained.

If the test is positive, in other words if a leakage is detected, the different parts of the checking device release the valve 3, and the pin 13 is raised by the jack 60 so that it projects upwards. The valve holder 7 with valve 1 is ejected to the branch 21 of the conveyor circuit and will be shunted at the first shunt 22 to the second circuit 502.

If the test is negative (no leakage detected), the valve holder 7 with valve 1 is removed to the branch 21, while keeping the pin 13 totally retracted, so that the valve holder will not be removed at the first shunt 22 to the circuit 502 but will continue its course to the third circuit 503 in order to proceed to the other processing stations D and E.

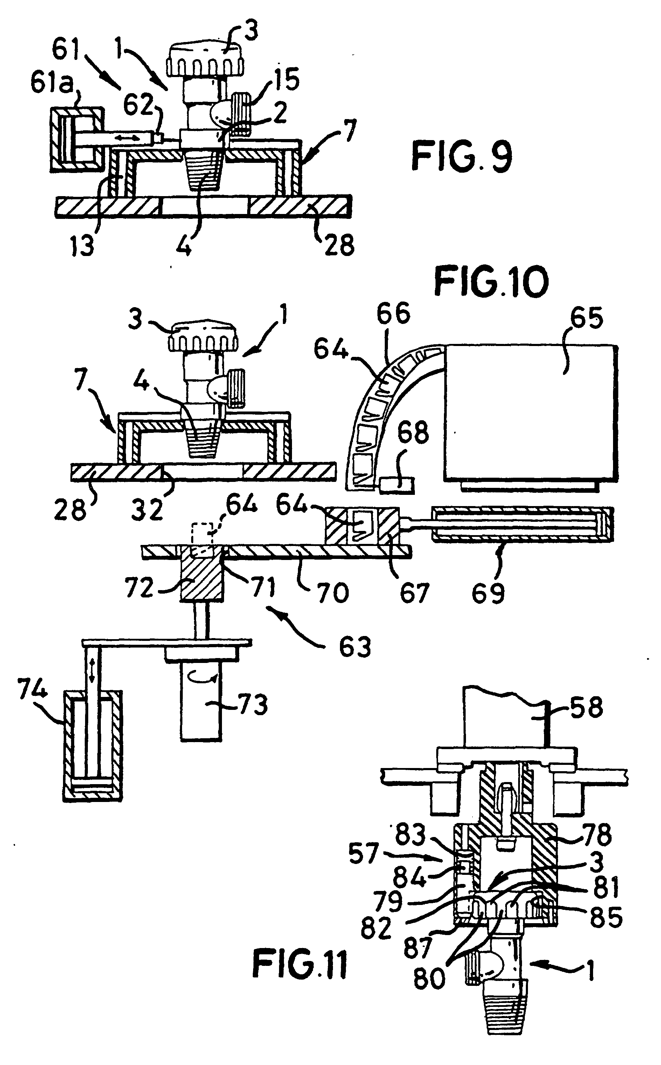

The processing station D is equipped with a device 61 for marking the valve 1 which passed the gas-tightness test, for example by marking the valve 1 with the date of the gas-tightness test, as shown in Figure 9.

The valves 1 that arrive at processing station D have satisfactorily passed the two gas-tightness tests (with valve open and with valve closed) at gas-tightness testing station C. The validation of these tests is carried out by marking the date of the operations.

Carrying out the date marking, on a face of the collar 2, can be effected by engraving or die stamping.

Engraving can be obtained by means of a standard commercial unit that operates on the principle of micro-impulses (stamping).

The example shown in Figure 9 corresponds to a die stamping operation obtained through a jack 61a equipped, at the end of the rod, with the stamp 62 to be inscribed.

Since the valve 1 is made of brass which is easily deformable, this solution by die stamping is well adapted. The marking is effected on the face of the collar 2 opposite the outlet opening 15. Of course, for this operation, the valve holder 7 with valve 1 is held by a pneumatic clamping unit similar to that of Figure 4, not shown in Figure 9.

As variant, the marking at processing station D can be carried out by rubber-stamping, instead of die stamping. This rubber-stamping can be effected with the help of an ink pad in order to mark a checked and satisfactory valve with a coloured spot. The rubber-stamping is advantageously carried out in the facing 34 (Figure 5) of the inset seating situated on the upper part of the operating knob 3.

After this marking operation, the valve holder is placed back on the conveyor circuit and is conveyed to the processing station E equipped, as shown in Figure 10, with a device 63 for fitting a flow regulator 64 to the valve 1.

The flow regulators 64 are stored in a vibrating bowl 65 and routed up to the end of a chute 66 whose lower extremity is situated above a receptacle 67 provided with a central vertical bore for the seating of a flow regulator 64. At the lower end of the chute 66 there is provided a sliding gate operated by a jack 68 adapted for allowing the flow regulators 64 to fall one by one into the receptacle 67 when that is necessary. The receptacle 67 is mobile in translation, through action of the jack 69, on a plate 70 extending under the bearing plate 28 on to which the valve holder 7 with valve 1 are clamped.

In the axis of the tapered threaded connector 4, the plate 70 comprises a hole 71 for the passage of a screwing connector 72 borne on the shaft, of vertical axis, of a pneumatic motor 73. The elevation of the unit of the connector 72 and the motor 73 is adjustable by a jack 74.

The receptacle 67, containing a flow regulator 64, is moved above the screwing connector 72 placed in low position. The flow regulator 64 descends by gravity into the connector 72. The receptacle 67 is then moved sideways to the right and, by a upward vertical displacement controlled by the jack 74, accompanied by a rotating movement controlled by the motor 73, the connector 72 positions the flow regulator 64 in the tapered threaded connector 4.

This operation having been effected, the valve holder 7 with valve 1 is taken out of the processing station E and placed back on the conveyor circuit 5 to be conveyed to an unloading area 75 (Figure 1) where an operator unloads the valves 1 from the valve holders 7, to put them away.

The empty valve holders 7 are conveyed by the circuit to rejoin, via branch 3, the loading station situated in the loading area 17.

The third circuit 503 has, downstream of the processing station E, a branch that passes in front of the exit of an additional processing station C' whose entrance is situated on the second circuit 502, downstream of the first shunt 22.

This additional processing station C' is an additional gas-tightness testing station, similar to gas-tightness testing station C, destined for subjecting to an additional gas-tightness test the valves that have failed the first test at a gas-tightness testing station C.

The second circuit 502 therefore routes, from the first shunt 22, valve holders whose pin 13 had been raised.

Just upstream of the additional gas-tightness testing station C' a station 76 is provided for resetting the pin 13 projecting upwards from the valve holder 7 and placing it in its reset position, before the test in the additional gas-tightness testing station C'.

The valve holder 7 with valve 1 is then introduced in the additional gas-tightness testing station C' equipped with a device similar to that of Figures 7 and 8.

The additional gas-tightness tests (one with the valve open, and one with the valve shut) are carried out as previously described, because it can happen that during the first sequence of measurement the connector 53 or the end piece 52 was not correctly placed and could have been the cause of a leakage.

If the leakage is confirmed at the additional gas-tightness testing station C', the valve is considered as defective and the valve holder is removed on to the conveyor circuit to rejoin, via the branch 23, the loading area 17 where the defective valve is removed from the valve holder and discarded. In case of confirmation of the leakage at the additional gas-tightness testing station C', no action is effected on the pins 13 of the valve holder that remain in reset position.

If at the additional gas-tightness testing station C' no leakage is detected on a valve 1 both in open position and in shut position, the valve 1 is considered as being satisfactory. In order to mark this status or condition, conversely to what occurred at gas-tightness testing station C, the pin 13 is pressed in order to project upwards out of the vertical bore 14 and in order to indicate that the valve is satisfactory. In these conditions, when such a valve holder with its pin projecting upwards passes the second shunt 24, there is identification of a satisfactory valve and shunting of the valve holder in order to reinsert it in the branch 21 and to take it back into the third circuit 503. Upstream of the exits of the gas-tightness testing station C a station 77 is provided for resetting the upwardly projecting pins 13. The returned valve holder will therefore not be diverted at the first shunt 22, and will be able to finish the processes at processing stations D and E.

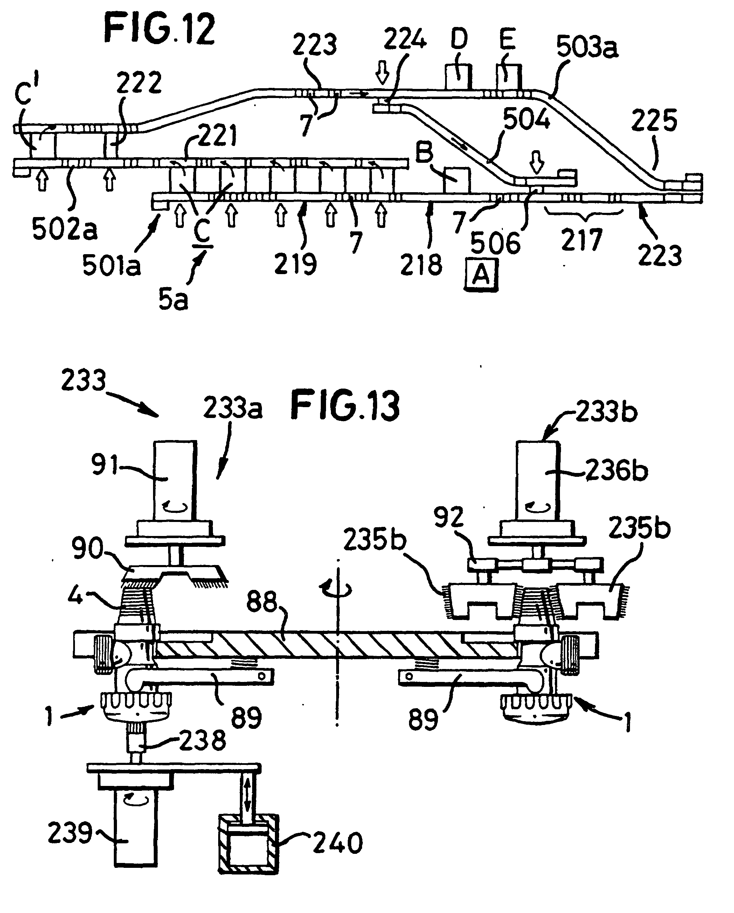

Figure 11 shows an advantageous embodiment of the rotational drive mechanism for the operating knob 3. The rotational drive mechanism comprises a clamp 57 for the operating knob 3 of the valve 1.

The clamp 57 comprises a bell-shaped body 78 destined to be attached to the lower part of the shaft of the motor 58 mounted on a vertically mobile support. The clamp 57, as already explained, can therefore have a rotating movement round a vertical axis and a vertical translation movement. The clamp 57 comprises at least one retractable finger 79 and, generally, several fingers 79 regularly spaced round the vertical axis of the clamp. Preferably three fingers 79 angularly separated at 120° are provided. Each retractable finger 79 is adapted for fitting into a conformation 80 between adjacent protuberances 81 regularly spaced apart on the cylindrical outer surface of the operating knob 3.

Generally, the conformations 80 are formed by seats comprised between two protuberances 81 provided on the peripheral cylindrical surface of the operating knob 3 and oriented parallel to the axis of the housing of the valve 1. The protuberances 81 are regularly spaced on the periphery of the operating knob 3 and their upper extremity 82 is round.

The retractable fingers 79 have a cylindrical shape, of axis parallel to that of the clamp 57 and the valve housing 16. The fingers are slidably mounted, in cylindrical seats provided in the body 78, parallel to the direction of the axis of the valve housing 16, against elastic returning means consisting, for each finger, of a helical compression spring 83. This spring 83 is positioned between the upper extremity of the bore serving as a seating for the finger 79 and a shoulder of this finger formed by the base of a pin 84 of smaller diameter, forming one piece with the finger 79 and lodged inside the spring 83. The body 78 comprises at is lower part 85 of slight greater diameter than the maximum diameter of the operating knob 3, this lower part 85 cutting the bores of the fingers 79. Thus, approximately over half its lower length, each finger 79 projects by a portion of cylindrical surface into the lower part 85. The lower extremity 86 of the finger 79 is chamfered and comes to rest against a stop 87, attached to the body 78, when the finger 79 is pressed downwards to a maximum. The diameter of the finger 79 is selected in order that the portion of cylindrical surface, projecting into the bore 85, fits into a confirmation 80, between two adjacent protuberances 81.

The operation and the gripping of the clamp 57 with the operating knob 3 are as follows.

Starting from the raised position of the clamp 57, even though the operating knob 3 and the valve 1 have been, coaxially, placed under this clamp, the clamp 57 is lowered by the jack 58.

If the fingers 79 are at right angles to a protuberance 81, they fit directly into this protuberance, without being pressed back upwards against the springs 83.

Conversely, if a finger 79 arrives at right angles to a protuberance 81, it is pressed back upwards against the spring 83, the stroke of the finger 79 being sufficient to absorb the whole downwards movement of the clamp 57.

This clamp 57 is then made to rotate. If the fingers 79 are already gripping in the confirmations 80, the operating knob 3 is immediately driven in rotation.

If the fingers 79 have been pressed back by a protuberance 81, as from the start of rotational movement a sliding occurs between the clamp 57 and the operating knob 3 and each finger 79 will be opposite a confirmation 80 and penetrate it parallel to the axial direction under the action of the spring 83. The rotational driving of the operating knob 3 is therefore effective.

Making the operating knob 3 rotate is thus ensure by a positive drive with the form of the fingers 79 and the protuberances 81 working together. The forces exerted are tangential to the operating knob 3; practically no vertical effort is exerted on the operating knob 3 during the opening or shutting phase of the valve 1.

The translation and rotation movements of the clamp 57 can be simultaneous.

The operation of the whole of the installation results from the preceding explanations and it would not appear useful to detail it further.

With reference to Figure 12 a variant of the embodiment of Figure 1 can be seen.

The processing stations already described A, B, C, D, E and C' will be found. The principal difference, leading to the simplification of the circuits, is due to the fact that the exit from the additional gas-tightness testing station C', for the additional gas-tightness test, is situated upstream of the processing stations D and E, whereas in Figure 1, the exit from additional gas-tightness testing station C' is downstream of the processing stations D and E.

According to Figure 1, when a valve has passed the gas-tightness test at the additional gas-tightness testing station C', it has to be returned, at the second shunt 24, in the branch 21 in order to proceed to processing stations D and E. It should therefore distinguish at this second shunt 24 between:
(a) the valves that have passed the first gas-tightness test at gas-tightness testing stations C and that have already passed through processing stations D and E, and
(b) the valves that, having failed the first test at gas-tightness testing stations C, have passed the additional test at the additional gas-tightness testing station C'.

This explains why, in the solution corresponding to the circuits of Figure 1, the pin 13 of a valve holder with valve that has passed the first gas-tightness test in gas-tightness testing station C, has to have a different condition or status from pin 13 of a valve holder with valve that has passed the gas-tightness test in additional gas-tightness testing station C'. The latter valve has to be returned, at the second shunt 24, to the processing stations D and E, whereas the preceding one already processed can be unloaded from the circuits.

By placing the additional gas-tightness testing station C' with its exit upstream of the processing stations D and E as shown in Figure 12, the pin 13 of a valve holder with a valve that has passed the second test can be placed in the same condition or status as a pin 13 of a valve holder equipped with a valve that has passed the first gas-tightness test in gas-tightness testing station C.

Now the installation of Figure 12 will be considered in greater detail. The conveyor circuit 5a will be found with three elementary circuits 501a, 502a and 503a, equivalent to the circuits 501, 502 and 503 of Figure 1.

The circuit 501a comprises two branches 218, 219 one in the extension of the other, whereas in Figure 1 these two branches were connected by a curved part.

Generally speaking, the parts or elements of variants described with regard to Figures 12 to 16 are designated by numerical references of which the Figure of certain ones will be equal to 2 and of which the Figures of tens and units will be identical to those used during the description of equivalent elements of the preceding Figures. The description of these elements will not be resumed or will only be effected succinctly.

The branch 221 of the circuit 501a receives the valve holder after going past the gas-tightness testing station C and routes them to a first shunt 222.

The second circuit 502a forms a type of U of which one branch extends the branch 221, from the entrance to shunt 222 to the entrance of additional gas-tightness testing station C'. The other branch of circuit 502a, parallel to the first, connects the exit from the additional gas-tightness testing station C' to the exit from the first shunt 222.

The third circuit 503a is also connected to the exit from the first shunt 222. The downstream extremity of this circuit 503a is tangent or connects to the up-line extremity of the first circuit 501a in an area 225.

The processing stations D and E are situated downstream of the additional gas-tightness testing station C' following the circuit 503a.

A fourth circuit 504 is provided in order to connect a second shunt 224 situated on the circuit 503a downstream of the additional gas-tightness testing station C' and upstream of the processing stations D and E, and a third shunt 506 situated on the circuit 501a in an area 217 where the operators unload the valves to be discarded and load the valves to be tested on to the valve holders.

The operation of the installation of Figure 12 corresponds on the whole to that of Figure 1 with the few following differences.

The control of the pin 13 of the valve holders in additional gas-tightness testing station C', as already previously explained, is identical to that effected in gas-tightness testing station C. In the example considered with regard to Figure 1, when a valve fails the gas-tightness test in a gas-tightness testing station C, the pin 13 is raised so that it projects upwards. In the case of the installation of Figure 12, the same procedure is adopted for a valve that fails the gas-tightness test at additional gas-tightness testing station C'. For that, the additional gas-tightness testing station C' of Figure 12 is equipped with a device (not shown) which enables the raised pin 13 to be retracted (since this is a valve which has failed the first test at gas-tightness testing station C) in order to replace this pin in reset position before the test at the additional gas-tightness testing station C'.

The first shunt 222 only directs towards the additional gas-tightness testing station C' the valves which have failed the first gas-tightness test at gas-tightness testing station C. On the other hand, the valves tested as correct at gas-tightness testing station C, at the first shunt 222, proceed directly on the circuit 503a, short-circuiting the additional gas-tightness testing station C'.

At the second shunt 224, the valve holders with valves that have passed either the gas-tightness test at a gas-tightness testing station C or a gas-tightness test at the additional gas-tightness testing station C', are held on the circuit 503a in order to pass through the processing stations D and E.

On the other hand, the valves that have failed the gas-tightness test are associated with a valve holder whose pin 13 is in a different condition or status, raised in the example considered; the valves are directed on to the circuit 504 in order to be discarded upon arriving in the area 217.

Figure 13 shows a alternative of the cleaning device as shown in Figure 5. Preferably the brushing operations are effected at the processing station A in closed chamber to protect the operators from the projections of particles due to the brushing. Furthermore the processing station A is separated from the circuits as shown in Figure 12.

In the cleaning device 233 of Figure 13, the valves 1 have not yet been placed on the valve holders 7; they are manually positioned, head downwards, on a horizontal transfer plate 88, rotational indexed, able to turn round its vertical axis.

Each valve 1 is held by an elastic clamping locking device 89, in a seating provided on the periphery of the plate 88; the valve housing 16 has its axis vertical and the tapered threaded connector 4 of the valve projects above the plate 88. The brushing module 233 comprises two brushing devices 233a and 233b provided in diametrically opposed positions of the plate 88 which, by its rotation, passes the valve 1 at right angles to each of these brushing devices.

The brushing device 233a comprises, under the plate, a brush 238, a motor 239 and a jack 240, similar to the elements described with regard to Figure 5, for brushing the seating of the inset 34, these elements having a disposition rotated through 180°.

The brushing device 233a comprises, above the plate 88, a bell-shaped brush 90 driven rotatably round a vertical axis by a motor 91. This brush is positioned in a manner so as to act on the face of the transverse extremity of the tapered threaded connector 4 in order to provide a perfect connection at the gas-tightness testing stations C and C'. This operation is carried out twice during the cycle.

The brushing device 233b is intended for cleaning the threading of the tapered threaded connector 4. This device 233b comprises a pair of diametrically opposed brushes 235b, rotatably mounted round a vertical axis situated on the radial extremities of a horizontal arm 92. This arm 92 is rotatably driven round a vertical axis situated midway between the brushes 235b.

The rotational drive of the arm 92 is provided by a motor 236a, of vertical axis. Each brush 235b has the shape of a truncated cone whose generator angle corresponds to the generator angle of the truncated tapered threaded connector 4. The large base of each brush 235b forms the upper base. The bristles of each brush 235b are provided on the exterior surface of the truncated cone, with an orientation approximately perpendicular to the truncated surface.

The brushing carried out by the brushes 235b enables the deposits of sealing ring in order to provide a correct connection of a clip at the gas-tightness testing station; this brushing also enables the screwing of the valve on to a gas cylinder to be facilitated. This operation is effected three times during the cycle.

The brushing operations as a whole having been effected, an operator retrieves the brushed valve from the processing station A situated apart from the conveying system according to the variant of the embodiment as shown in Figure 12. The operator transfers the valve on the conveying system and installs it on a valve holder 7.

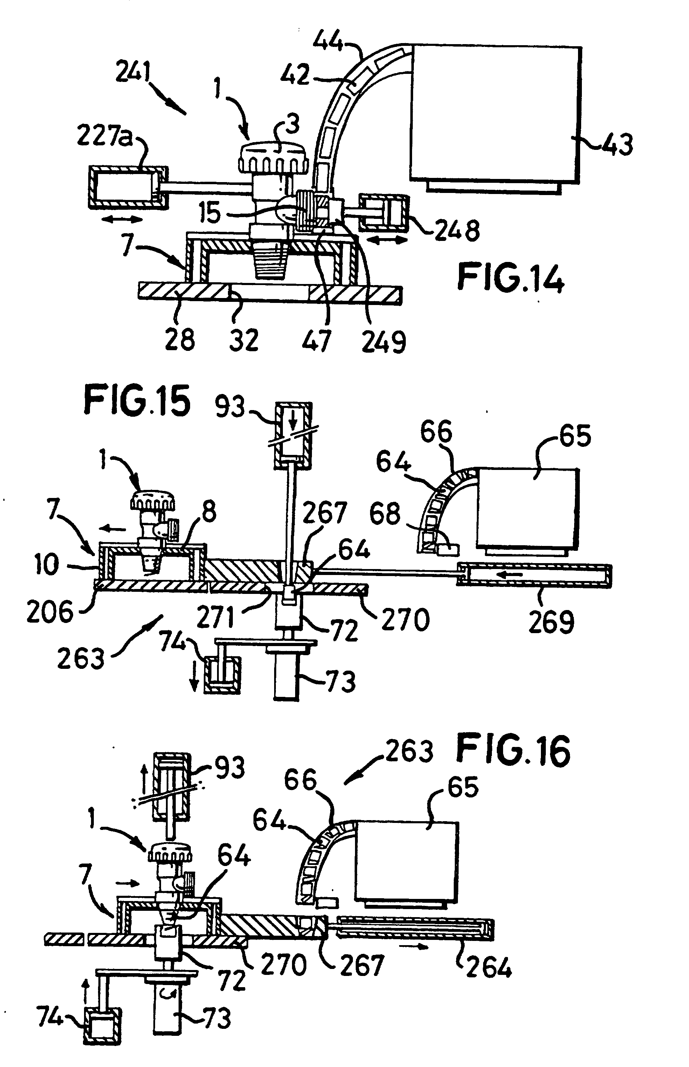

Figure 14 shows a variant 241 of the embodiment of a part of the device for fitting a self-clamping joint fitting device of Figure 6.

The valve holder 7 with valve 1 is represented immobilized by a jack 227a, as already mentioned with regard to Figure 4.

There will be found the chute 44 for routing the joints 42 from the vibrating bowl 43 to the receptacle 47. The nose of the valve is positioned against the receptacle 47.

The rod of the jack 248 is equipped with an end piece 249 whose diameter is sufficient for holding the line of joints 42 in the chute 44 when the end piece 249 effects a translation, from right to left in Figure 14, in order to collect a self-clamping joint 42, in order to place it in the outlet opening 15 of the valve 1.

On return of the rod of the jack 248 from left to right in Figure 14, the end piece 249 frees the line and a new joint 42 falls, by gravity, into the receptacle 47.

Figure 14 corresponds to a simplification of the solution as shown in Figure 6 which caused a sliding gate 45 to intervene.

Figures 15 and 16 are schematic views, in two different positions, of a variant 263 of the device for fitting a flow regulator as shown in Figure 10.

There will be found the vibrating bowl 65 in which the flow regulators 64 are stored which are routed to the end piece of a chute 66 where the sliding gate operated by the jack 68 is for feeding the receptacle 267.

This receptacle 267 operated in translation by the jack 269 is in contact, on the left, with the valve holder 7. The plate 270 on which the receptacle 267 slides is situated at the same level as the conveyor belt 206 in which the valve holders 7 are disposed.

The receptacle 267 plays a double role. In its movement from right to left in Figure 15, it ejects the valve holder 7 with valve 1 (which has just been equipped with a flow regulator 64) on to the conveyor 206, and transfers a flow regulator 64, fallen into the seating of the receptacle 267 above the axis of the connector 72. A jack 93 of vertical axis is disposed in the alignment of the axis of the screwing connector 72, above the receptacle 267.

When the flow regulator 64, lodged in the receptacle 267, is placed in the alignment of the screwing connector 72, the exit of the rod of the jack 93 is operated, this rod having a sufficient length to traverse the seating of the receptacle 267 and press the flow regulator 64 into the seating of the screwing connector 72.

This phase corresponds to the representation in Figure 15.

The rod of the jack 93 then returns to high position while the rod of the jack 269 returns to withdrawn position to the right as shown in Figure 16. The valve holder 7, under action from a transverse pushing means not shown, follows the receptacle 267 in its movement from left to right. The valve is placed above the screwing connector 72, coaxially to the latter. The valve holder 7 with valve 1 is held in this position by the jack 93, situated above the valve 1 in the axis of the latter; the rod of the jack 93 can exert a downward pressure on the valve 1 and on the valve holder 7 thus held against the plate 270. In this way the jack 93 acts as a vertical clamping jack.

The motor 73 starts to rotate whereas the jack 74 drives an upward movement in translation of this motor 73 and the screwing connector 72, which enables the flow regulator 64 to be screwed on to the tapered threaded connector 4 of the valve 1. Concurrently, another flow regulator 64 has been admitted into the seating of the receptacle 267.

When these operations have been effected, the valve holder 7 with valve 1 is ejected from the processing station E as shown in Figure 15 to return on to the conveyor 206 and be routed to a operator who unloads the valves 1 from the valve holders 7.

The empty valve holders 7 are conveyed to the manual loading station for a new cycle.

It should be noted that the whole of the valve processing line and its general layout are not predetermined. It is possible to modify the position and the order of carrying out the processing modules and/or to add, depending on the requirements of the evolution of development, new checking or processing modules. In particular, it is possible to position, at points on the circuits, checking stations for resistance point on the opening/shutting course of the operating knob, and for the condition of the threads of the nose and the tapered threaded connector.

The line can process by series average tapered threaded connector valves or small tapered threaded connector valves. Only the valve holders 7 will have to be changed to go from one type to the other in order to adapt to the diameter of the tapered threaded connector.

## Claims

1. Installation (I) for processing gas cylinder valves (1), wherein each valve (1) comprises an operating knob (3) and a collar (2) arranged on the side opposite to the operating knob (3) provided with a threaded end (4) for attaching the valve (1) to a cylinder, which installation includes a conveyor circuit (5, 5a) for routing the valves (1) towards one or several processing devices (33, 41, 50, 61, 63, 233, 241, 263), which conveyor circuit (5, 5a) comprises a horizontal mobile conveyor surface (6, 206) on which individual valve holders (7) are positioned, each valve holder (7) comprising a plate (8) for receiving the collar (2) of a valve (1) to be conveyed, which plate (8) is provided with a bore (9) for the passage of the threaded end (4), the valve holder (7) furthermore comprises support means (10) for the plate (8) which support means (8) rest on the conveyor surface (6, 206) and hold the plate (8) at an elevation such that, during normal operation, the lower extremity (11) of the threaded end (4) is held above the conveyor surface (6).

2. Installation according to claim 1, wherein each processing device is situated in a processing station (A, B ... E) placed on one side of the conveyor circuit (5) and wherein each processing station (A, B ... E) comprises a clamping device (27, 89), adapted for immobilizing the valve (1) during processing.

3. Installation according to claim 2, wherein at each processing station (A, B ... E) displacement means (26) are provided for removing the valve holder (7) with valve (1) from the conveyor circuit (5) and introducing it into the processing station, and for placing the valve holder (7) with valve (1) back on the conveyor circuit (5) after processing.

4. Installation according to any one of the claims 1-3, wherein one of the processing devices is a gas-tightness testing device (50) for checking the gas-tightness of a valve (1), and wherein the other processing devices are selected from the group consisting of
(a) a cleaning device (33, 233), in particular for cleaning the threaded end (4);
(b) a device (41, 241) for fitting a self-clamping joint;
(c) a device (61) for marking the valve (1) which passed the gas-tightness test; and
(d) a device (63, 263) for fitting a flow regulator (64) to the valve (1).

5. Installation according to claim 4, wherein the conveyor circuit (5) comprises:
(a) a first circuit (501, 501a) passing along a loading area (17) where, during normal operation, the valves (1) are placed in the valve holders (7), which first circuit (501, 501a) extends along at least one gas-tightness testing device (50);
(b) a second circuit (502, 502a);
(c) a third circuit (503, 503a) for conveying valve holders (7) with valves (1) along other possible processing stations before their removal; and
(d) a first shunt (22, 222) capable of diverting a valve holder (2) with a valve (1) that has failed the gas-tightness test towards the second circuit (502, 502a), and of diverting a valve holder (2) with a valve (1) that has passed the gas-tightness test towards the third circuit (503, 503a).

6. Installation according to claim 4 or 5, which comprises several gas-tightness testing stations (C), each equipped with a gas-tightness testing device (50), which gas-tightness testing stations (C) are arranged to work in parallel, wherein the gas-tightness testing stations (C) are placed in series between two branches (19, 21; 219, 221) of the conveyor circuit (5, 5a), or on a carousel.

7. Installation according to claim 4 or 5, wherein the second circuit (502, 502a) is equipped with an additional gas-tightness testing station (C') equipped with a gas-tightness testing device, which installation further comprises a second shunt (24, 224) capable of directing a valve holder (7) with a valve (1) that has passed the second gas-tightness test to other possible processing stations (D, E) along the third circuit (503, 503a).

8. Installation according to any one of the claims 4 to 7, wherein each valve holder (7) is equipped with a result indicator (13) indicating the result of the gas-tightness test to which the valve (1) has been subjected, wherein the gas-tightness testing stations (C, C') are provided with means to set the result indicator (13), and wherein the shunts (22, 24; 222, 224) are provided with means to read the status of the result indicator (13) and for diverting the valve holder (2) with valve (1) in accordance with the status of the result indicator (13).

9. Installation according to claim 8, wherein the exit from the second gas-tightness testing station (C') is situated upstream of the processing station (D) provided with the device (61) for marking the valve (1) which passed the gas-tightness test and of the processing station (E) provided with the device (63, 263) for fitting a flow regulator to the valve (1), to allow processing valves that have passed the second gas-tightness test to be processed by the devices at the processing stations (D and E).

10. Installation according to claim 8 or 9, wherein the result indicator consists of a pin (13) slidably mounted in a vertical bore (14) of the valve holder (7) between a first position in which the pin (13) is retracted in the vertical bore (14) and a second position in which the pin (13) projects upwards out of the vertical bore (14), and wherein each gas-tightness testing station (C, C') is provided with a manipulator (60) to set the pin (13) in accordance with the result of the gas-tightness test.

11. Installation according to claim 10, wherein the each valve holder (7) comprises two pins (13) disposed symmetrically in relation to a central axis parallel to the direction of forward movement of the valve holder (7).

12. Installation according to any one of the claims 4 to 11, provided with a processing station (A) equipped with the device (41, 241) for fitting s self-clamping joint (42) is situated upstream of the gas-tightness testing device (C).

13. Installation according to any one of the claims 4 to 12, provided with a processing station (A) equipped with the cleaning device (33, 233) upstream of the gas-tightness testing device (C), and provided with a processing station (D) equipped with the device (61) for marking the valve (1) and with processing station (E) equipped with the device (63, 263) for fitting a flow regulator downstream of the gas-tightness testing device (C).

14. Installation according to claim 14, wherein the processing station (A) equipped with the cleaning device (233) is situated apart from the circuit (5a) and comprises a closed chamber enclosing the cleaning device (233).

15. Installation according to any one of the preceding claims, wherein each plate (8) of a valve holder (7) has an indexing means (12) for turning the valve (1) in the bore (9) to a pre-determined direction.

16. Installation according to any one of the claims 4 to 15 for processing valves which further comprise an inlet opening at the lower extremity of the threaded end (4), an outlet opening (15) and an operating knob (3) of a valve body disposed in the valve (2) in order, in shut position, to cut off all communication between the inlet opening and the outlet opening, wherein the gas-tightness testing device (50) comprises:
(a) a source for injecting gas under pressure through the inlet opening of the valve (2);
(b) shutting means (51, 52) for shutting the outlet opening (15) of the valve (2);
(c) a rotational drive mechanism (57, 58, 59) for the operating knob (3) between the open and shut positions of the valve (1); and
(c) a leakage detector (M) acting on pressure variations, adapted to deliver a signal representative of the detection of a leakage when a fall in pressure larger than a predetermined threshold is detected over a predetermined duration.

17. Installation according to claim 16, wherein the rotational drive mechanism for the operating knob (3) comprises a rotatable clamp (57) mounted slidably in vertical direction, a pneumatic motor (58) for rotating the rotatable clamp (57), which clamp (57) comprises a bell-shaped body (78), at least one finger (79), which is retractable in a bore of the bell-shaped body (78) against elastic returning means (83) and which finger (79) can engage with the operating knob (3).

18. Installation according to claim 17 for processing valves equipped with operating knobs (3) having a cylindrical outer surface provided with protuberances (81) regularly spaced apart on cylindrical outer surface, wherein the bell-shaped body (78) has an lower part (85) which can fit over the operating knob (3), wherein each retractable finger (79) is slidably mounted, parallel to the axis of the body of the valve (2) into the lower part (85) so as to be able to engage with the operating knob (3) between adjacent protuberances (81).

## Patentansprüche

1. Anlage (I) zum Bearbeiten von Gaszylinderventilen (1), wobei jedes Ventil (1) einen Betätigungsknopf (3) und einen auf der dem Betätigungsknopf (3) gegenüberliegenden Seite angeordneten Kragen (2) aufweist, der mit einem Gewindeende (4) zur Befestigung des Ventiles (1) an einem Zylinder versehen ist, wobei die Anlage einen Förderkreis (5, 5a) zum Fördern der Ventile (1) zu einer oder mehreren Bearbeitungsvorrichtungen (33, 41, 50, 61, 63, 233, 241, 263) enthält, wobei der Förderkreis (5, 5a) mit einer horizontalen beweglichen Förderfläche (6, 206) versehen ist, auf der einzelne Ventilhalter (7) angeordnet sind, wobei jeder Ventilhalter (7) eine Platte (8) zur Aufnahme des Kragens (2) eines zu befördernden Ventiles (1) aufweist, welche Platte (8) mit einer Bohrung (9) für den Durchtritt des Gewindeendes (4) ausgestattet ist, wobei der Ventilhalter (7) ferner Tragmittel (10) für die Platte (8) aufweist, welche Tragmittel (10) auf der Förderfläche (6, 206) ruhen und die Platte (8) in einer angehobenen Lage halten, derart, daß während des Normalbetriebes das untere Ende (11) des Gewindeendes (4) oberhalb der Förderfläche (6) liegt.

2. Anlage nach Anspruch 1, bei welcher jede Bearbeitungsvorrichtung in einer Bearbeitungsstation (A, B ... E) angeordnet ist, die an einer Seite des Förderkreises (5) vorgesehen ist, und wobei jede Bearbeitungsstation (A, B ... E) eine Klemmvorrichtung (27, 89) aufweist, die zum Stillsetzen des Ventiles (1) während der Bearbeitung ausgebildet ist.

3. Anlage nach Anspruch 2, bei welcher an jeder Bearbeitungsstation (A, B ... E) Verlagerungsmittel (26) vorgesehen sind, um den Ventilhalter (7) mit dem Ventil (1) aus dem Förderkreis (5) zu entfernen und ihn in die Bearbeitungsstation einzuführen und den Ventilhalter (7) mit dem Ventil (1) auf dem Förderkreis (5) nach der Bearbeitung wieder anzuordnen.

4. Anlage nach einem der Ansprüche 1 bis 3, bei welcher eine der Bearbeitungsvorrichtungen eine Gasdichtheits-Testvorrichtung (50) zum Überprüfen der Gasdichtheit eines Ventiles (1) ist, und bei welcher die anderen Bearbeitungsvorrichtungen aus der Gruppe gewählt werden, bestehend aus
(a) einer Reinigungsvorrichtung (33, 233), insbesondere zum Reinigen des Gewindeendes (4) ;
(b) einer Vorrichtung (41, 241) zum Aufsetzen einer Selbstklemmdichtung;
(c) einer Vorrichtung (61) zum Markieren der Ventile (1), welche den Gasdichtheitstest bestanden haben; und
(d) einer Vorrichtung (63, 263) zum Aufsetzen eines Durchflußreglers (64) auf das Ventil (1).

5. Vorrichtung nach Anspruch 4, bei welcher der Förderkreis (5) aufweist:
(a) einen ersten Kreis (501, 501), der sich entlang einer Ladezone (17) erstreckt, wo während des Normalbetriebes die Ventile (1) in den Ventilhaltern (7) angeordnet werden, wobei der erste Kreis (501, 501a) sich entlang zumindest einer Gasdichtheits-Testvorrichtung (50) erstreckt;
(b) einen zweiten Kreis (502, 502a);
(c) einen dritten Kreis (503, 503a) zum Vorbeiführen der Ventilhalter (7) mit den Ventilen (1) an anderen möglichen Bearbeitungsstationen vor ihrer Entfernung; und
(d) eine ersten Weiche (22, 222), die befähigt ist, einen Ventilhalter (2) mit einem Ventil (1), welches den Gasdichtheitstest nicht bestanden hat, gegen den zweiten Kreis (502, 502a) abzuleiten, und einen Ventilhalter (2) mit einem Ventil (1), welches den Gasdichtheitstest bestanden hat, gegen den dritten Kreis (503, 503a) abzuleiten.

6. Anlage nach Anspruch 4 oder 5, welche mehrere Gasdichtheits-Teststationen (C) aufweist, die jeweils mit einer Gasdichtheits-Testvorrichtung (50) ausgestattet sind, wobei die Gasdichtheits-Teststationen (C) so angeordnet sind, daß sie parallel arbeiten, wobei die Gasdichtheits-Teststationen (C) zwischen zwei Zweigen (19, 21; 219, 221) des Förderkreises (5, 5a) in Serie geschaltet sind, oder auf einem Karussell angeordnet sind.

7. Anlage nach Anspruch 4 oder 5, bei welcher der zweite Kreis (502, 502a) mit einer zusätzlichen Gasdichtheits-Teststation (C') ausgestattet ist, die mit einer Gasdichtheits-Testvorrichtung versehen ist, wobei jede Station ferner eine zweite Weiche (24, 224) aufweist, die befähigt ist, einen Ventilhalter (7) mit einem Ventil (1), welches den zweiten Gasdichtheitstest bestanden hat, zu anderen möglichen Bearbeitungsstationen (D, E) entlang des dritten Kreises (503, 503a) zu leiten.

8. Anlage nach einem der Ansprüche 4 bis 7, bei welcher jeder Ventilhalter (7) mit einem Ergebnisanzeiger (13) ausgestattet ist, der das Ergebnis des Gasdichtheitstests anzeigt, welchem das Ventil (1) unterworfen worden ist, wobei die Gasdichtheits-Teststationen (C, C') mit Mitteln zum Einstellen des Ergebnisanzeigers (13) versehen sind, und die Weichen (22, 24; 222, 224) mit Mitteln zum Ablesen des Status des Ergebnisanzeigers (13) versehen sind und zum Ableiten des Ventilhalters (2) mit dem Ventil (1) entsprechend dem Status des Ergebnisanzeigers (13).

9. Anlage nach Anspruch 8, bei welcher der Ausgang der zweiten Gasdichtheits-Teststation (C') stromaufwärts der Bearbeitungsstation (D) liegt, die mit einer Vorrichtung (61) zum Markieren des Ventiles (1) versehen ist, welches den Gasdichtheitstest bestanden hat, und der Bearbeitungsstation (E), die mit der Vorrichtung (63, 263) zum Aufbringen eines Durchflußreglers auf das Ventil (1) versehen ist, um die Bearbeitung der Ventile, welche den zweiten Gasdichtheitstest bestanden haben, durch die Vorrichtungen an den Bearbeitungsstationen (D und E) zu ermöglichen.

10. Anlage nach Anspruch 8 oder 9, bei welcher der Ergebnisanzeiger aus einem Stift (13) besteht, der gleitverschieblich in einer vertikalen Bohrung (14) des Ventilhalters (7) zwischen einer ersten Stellung angeordnet ist, in welcher der Stift (13) in die vertikale Bohrung (14) zurückgezogen ist, und einer zweiten Stellung, in welcher der Stift (13) nach oben aus der vertikalen Bohrung (14) herausragt, und wobei jede Gasdichtheits-Teststation (C, C') mit einem Manipulator (60) versehen ist, um den Stift (13) entsprechend dem Ergebnis des Gasdichtheitstests einzustellen.

11. Anlage nach Anspruch 10, bei welcher jeder Ventilhalter (7) zwei Stifte (13) aufweist, die symmetrisch bezüglich einer zentralen Achse parallel zur Richtung der Vorwärtsbewegung des Ventilhalters (7) angeordnet sind.

12. Anlage nach einer der Ansprüche 4 bis 11, die mit einer Bearbeitungsstation (A) versehen ist, welche mit der Vorrichtung (41, 241) zum Aufbringen einer Selbstklemmdichtung (42) ausgestattet und stromaufwärts der Gasdichtheits-Testvorrichtung (C) angeordnet ist.

13. Anlage nach einem der Ansprüche 4 bis 12, die mit einer Bearbeitungsstation (A) versehen ist, welche mit der Reinigungsvorrichtung (33, 233) stromaufwärts der Gasdichtheits-Testvorrichtung (C) ausgestattet ist, und mit einer Bearbeitungsstation (D), die mit der Vorrichtung (61) zum Markieren des Ventiles (1) versehen ist, und mit der Bearbeitungsstation (E), welche mit der Vorrichtung (63, 263) zum Aufbringen eines Durchflußreglers stromaufwärts der Gasdichtheits-Testvorrichtung (C) ausgestattet ist.

14. Anlage nach Anspruch 14, bei welcher die mit der Reinigungsvorrichtung (233) ausgestattete Bearbeitungsstation (A) getrennt vom Kreis (5a) angeordnet ist und eine geschlossene Kammer aufweist, welche die Reinigungsvorrichtung (233) umschließt.

15. Anlage nach einem der vorhergehenden Ansprüche, bei welcher jede Platte (8) eines Ventilhalters (7) ein Fortschaltmittel (12) aufweist, um das Ventil (1) in der Bohrung (9) in einer vorbestimmten Richtung zu drehen.

16. Anlage nach einem der Ansprüche 4 bis 15 zum Bearbeiten von Ventilen, welche ferner eine Einlaßöffnung am unteren Ende des Gewindeendes (4) aufweisen, eine Auslaßöffnung (15) und einen Betätigungsknopf (3) eines Ventilkörpers, der in dem Ventil (2) angeordnet ist, um in der Schließstellung jegliche Verbindung zwischen der Einlaßöffnung und der Auslaßöffnung zu verschließen, wobei die Gasdichtheits-Testvorrichtung (50) aufweist:
(a) eine Quelle zum Einblasen von Gas unter Druck durch die Einlaßöffnung des Ventiles (2);
(b) Verschließmittel (51, 52) zum Verschließen der Auslaßöffnung (15) des Ventiles (2);
c) einen Drehantriebsmechanismus (57, 58, 59) für den Betätigungsknopf (3) zwischen der Offenstellung und der Schließstellung des Ventiles (1); und
(d) einen Leckdetektor (M), der auf Druckvariationen anspricht, und so ausgebildet ist, daß er ein Signal abgibt, das repräsentativ für die Ermittlung eines Lecks ist, wenn ein Druckabfall größer als ein vorbestimmter Schwellenwert über eine vorbestimmte Zeitspanne ermittelt wird.

17. Anlage nach Anspruch 16, bei welcher der Drehantriebsmechanismus für den Betätigungsknopf (3) eine drehbare Klemme (57) aufweist, die in vertikaler Richtung gleitverschieblich montiert ist, einen Pneumatikmotor (58) zum schieblich montiert ist, einen Pneumatikmotor (58) zum Drehen der drehbaren Klemme (57), wobei die Klemme (57) einen glokkenförmigen Körper (78) und zumindest einen Finger (79) aufweist, der in einer Bohrung des glockenförmigen Körpers (78) gegen elastische Rückstellmittel (83) zurückziehbar ist, wobei der Finger (79) mit dem Betätigungsknopf (3) in Eingriff kommen kann.

18. Anlage nach Anspruch 17 zum Bearbeiten von Ventilen, die mit Betätigungsknöpfen (3) ausgestattet sind, welche eine zylindrische Außenfläche aufweisen, die mit Vorsprüngen (81) versehen sind, die regelmäßig beabstandet auf der zylindrischen Außenfläche vorhanden sind, wobei der glockenförmige Körper (78) einen unteren Teil (85) hat, der über den Betätigungsknopf (3) paßt, wobei jeder zurückziehbare Finger (79) parallel zur Achse des Körpers des Ventiles (2) in dem unteren Teil (85) gleitverschieblich montiert ist, um mit dem Betätigungsknopf (3) zwischen benachbarten Vorsprüngen (81) in Eingriff zu kommen.

## Revendications

1. Installation (I) pour le traitement de robinets (1) de bouteilles de gaz, dans laquelle chaque robinet (1) comporte un bouton de commande (3) et un col (2) disposé sur le côté opposé au bouton de commande (3) pourvu d'un bout fileté (4) pour attacher le robinet (1) à une bouteille, laquelle installation comprend un circuit de transport (5, 5a) pour acheminer les robinets (1) vers un ou plusieurs dispositifs de traitement (33, 41, 50, 61, 63, 233, 241, 263), lequel circuit de transport (5, 5a) comporte une surface de transport mobile horizontale (6, 206) sur laquelle des supports (7) individuels de robinet sont positionnés, chaque support (7) de robinet comportant une plaque (8) pour recevoir le col (2) d'un robinet (1) à transporter, laquelle plaque (8) est pourvue d'un orifice (9) pour le passage du bout fileté (4), le support (7) de robinet comportant en outre des moyens de soutien (10) pour la plaque (8), lesquels moyens de soutien (8) reposent sur la surface de transport (6, 206) et maintiennent la plaque (8) à une hauteur telle que, pendant le fonctionnement normal, l'extrémité inférieure (11) du bout fileté (4) est maintenue au-dessus de la surface de transport (6).

2. Installation selon la revendication 1, dans laquelle chaque dispositif de traitement est situé dans un poste de traitement (A, B ... E) placé sur un côté du circuit de transport (5) et dans laquelle chaque poste de traitement (A, B ... E) comporte un dispositif de serrage (27, 29), adapté pour immobiliser le robinet (1) pendant le traitement.

3. Installation selon la revendication 2, dans laquelle à chaque poste de traitement (A, B ... E), des moyens de déplacement (26) sont prévus pour enlever le support (7) de robinet avec le robinet(1) du circuit de transport (5) et l'introduire dans le poste de traitement, et pour replacer le support (7) de robinet avec le robinet (1) sur le circuit de transport (5) après le traitement.

4. Installation selon une quelconque des revendications 1 - 3, dans laquelle un des dispositifs de traitement est un dispositif de contrôle (50) de l'étanchéité au gaz pour vérifier l'étanchéité au gaz d'un robinet (1), et dans laquelle les autres dispositifs de traitement sont sélectionnés dans le groupe consistant en
(a) un dispositif de nettoyage (33, 233), en particulier pour nettoyer le bout fileté (4),
(b) un dispositif (41, 241) pour mettre en place un joint autoserrant,
(c) un dispositif (61) pour marquer le robinet (1) qui a réussi le contrôle de l'étanchéité au gaz, et
(d) un dispositif (63, 263) pour fixer un régulateur de débit (64) au robinet (1).

5. Installation selon la revendication 4, dans laquelle le circuit de transport (5) comporte
(a) un premier circuit (501, 501a) passant le long d'une zone de chargement (17) où, pendant le fonctionnement normal, les robinets (1) sont placés dans les supports (7) de robinet, lequel premier circuit (501, 501a) s'étend le long d'au moins un dispositif de contrôle (50) de l'étanchéité au gaz,
(b) un deuxième circuit (502, 502a),
(c) un troisième circuit (503, 503a) pour transporter les supports (7) de robinet avec les robinets (1) le long d'autres postes de traitement éventuels avant leur évacuation, et
(d) une première dérivation (22, 222) capable de dévier un support (2) de robinet avec un robinet (1) qui a raté le contrôle de l'étanchéité au gaz vers un deuxième circuit (502, 502a), et de dévier un support (2) de robinet avec un robinet (1) qui a réussi le contrôle de l'étanchéité au gaz vers le troisième circuit (503, 503a).

6. Installation selon la revendication 4 ou 5, qui comporte plusieurs postes de contrôle (C) de l'étanchéité au gaz, chacun étant équipé d'un dispositif de contrôle (50) de l'étanchéité au gaz, lesquels postes de contrôle (C) de l'étanchéité au gaz sont agencés pour travailler en parallèle, dans laquelle les postes de contrôle (C) de l'étanchéité au gaz sont placés en série entre deux branches (19, 21; 219, 221) du circuit de transport (5, 5a), ou sur un carrousel.

7. Installation selon la revendication 4 ou 5, dans laquelle le deuxième circuit (502, 502a) est équipé d'un poste de contrôle (C') supplémentaire de l'étanchéité au gaz équipé d'un dispositif de contrôle de l'étanchéité au gaz, laquelle installation comporte en outre une deuxième dérivation (24, 224) capable de diriger un support (7) de robinet avec un robinet (1) qui a réussi le deuxième contrôle de l'étanchéité au gaz vers d'autres postes de traitement (D, E) éventuels le long du troisième circuit (503, 503a).

8. Installation selon une quelconque des revendications 4 à 7, dans laquelle chaque support (7) de robinet est équipé d'un indicateur de résultat (13) indiquant le résultat du contrôle de l'étanchéité au gaz auquel le robinet (1) a été soumis, dans laquelle les postes de contrôle (C, C') de l'étanchéité au gaz sont pourvus de moyens pour régler l'indicateur de résultat (13), et dans laquelle les dérivations (22, 24; 222, 224) sont pourvues de moyens pour lire l'état de l'indicateur de résultat (13) et pour dévier le support (2) de robinet avec le robinet (1) en fonction de l'état de l'indicateur de résultat (13).

9. Installation selon la revendication 8, dans laquelle la sortie du deuxième poste de contrôle (C') de l'étanchéité au gaz est située en amont du poste de traitement (D) pourvu du dispositif (61) pour le marquage du robinet (1) qui a réussi le contrôle de l'étanchéité au gaz et du poste de traitement (E) pourvu du dispositif (63, 263) pour fixer un régulateur de débit au robinet (1), pour permettre aux robinets en cours de traitement qui ont réussi le deuxième contrôle de l'étanchéité au gaz d'être traités par les dispositifs aux postes de traitement (D et E).

10. Installation selon la revendication 8 ou 9, dans laquelle l'indicateur de résultat consiste en une broche (13) montée de manière coulissante dans un orifice vertical (14) du support (7) de robinet entre une première position dans laquelle la broche (13) est rétractée dans l'orifice vertical (14) et une deuxième position dans laquelle la broche (13) fait saillie vers le haut hors de l'orifice vertical (14), et dans laquelle chaque poste de contrôle (C, C') de l'étanchéité au gaz est pourvu d'un manipulateur (60) pour régler la broche (13) en fonction du résultat du contrôle de l'étanchéité au gaz.

11. Installation selon la revendication 10, dans laquelle chaque support (7) de robinet comporte deux broches (13) disposées symétriquement par rapport à un axe central parallèle à la direction du mouvement en avant du support (7) de robinet.

12. Installation selon une quelconque des revendications 4 à 11, pourvue d'un poste de traitement (A) équipé du dispositif (41, 241) pour mettre en place un joint autoserrant (42) situé en amont du dispositif de contrôle (C) de l'étanchéité au gaz.

13. Installation selon une quelconque des revendications 4 à 12, pourvue d'un poste de traitement (A) équipé d'un dispositif de nettoyage (33, 233) en amont du dispositif de contrôle (C) de l'étanchéité au gaz, et pourvue d'un poste de traitement (D) équipé du dispositif (61) pour marquer le robinet (1) et du poste de traitement (E) équipé du dispositif (63, 263) pour fixer un régulateur de débit en aval du dispositif de contrôle (C) de l'étanchéité au gaz.

14. Installation selon la revendication 14, dans laquelle le poste de traitement (A) équipé du dispositif de nettoyage (233) est situé à l'écart du circuit (5a) et comprend une chambre close enfermant le dispositif de nettoyage (233).

15. Installation selon une quelconque des revendications précédentes, dans laquelle chaque plaque (8) d'un support (7) de robinet a un moyen d'indexation (12) pour tourner le robinet (1) dans l'orifice (9) dans un sens prédéterminé.

16. Installation selon une quelconque des revendications 4 à 15 pour le traitement de robinets qui comprend, en outre, un orifice d'entrée à l'extrémité inférieure du bout fileté (4), un orifice de sortie (15) et un bouton de commande (3) d'un corps de robinet disposé dans le robinet (2) en vue, en position fermée, de couper toute communication entre l'orifice d'entrée et l'orifice de sortie, dans laquelle le dispositif de contrôle (50) de l'étanchéité au gaz comprend:
(a) une source pour injecter du gaz sous pression à travers l'orifice d'entrée du robinet (2),
(b) des moyens d'obturation (51, 52) pour obturer l'orifice de sortie (15) du robinet (2),
(c) un mécanisme d'entraînement rotatif (57, 58, 59) pour le bouton de commande (3) entre les positions ouverte et fermée du robinet (1), et
(c) un détecteur de fuite (M) agissant en fonction des variations de pression, adapté pour délivrer un signal représentatif de la détection d'une fuite quand une baisse de pression plus grande qu'un seuil prédéterminé est détectée au cours d'un laps de temps prédéterminé.

17. Installation selon la revendication 16, dans laquelle le mécanisme d'entraînement rotatif pour le bouton de commande (3) comporte une bride (57) rotative montée de manière coulissante dans le sens vertical, un moteur pneumatique (58) pour faire tourner la bride (57) rotative, laquelle bride (57) comporte un corps (78) en forme de cloche, au moins un doigt (79) qui est rétractable dans un orifice du corps (78) en forme de cloche contre des moyens de renvoi (83) élastique et lequel doigt (79) peut entrer en prise avec le bouton de commande (3).

18. Installation selon la revendication 17 pour le traitement de robinets équipés de boutons de commande (3) ayant une surface extérieure cylindrique pourvue de protubérances (81) régulièrement espacées sur la surface extérieure cylindrique, dans laquelle le corps (78) en forme de cloche a une partie inférieure (85) qui peut s'emboîter sur le bouton de commande (3), dans laquelle chaque doigt (79) rétractable est monté de manière coulissante, parallèlement à l'axe du corps du robinet (2) dans la partie inférieure (85) de manière à pouvoir entrer en prise avec le bouton de commande (3) entre des protubérances (81) adjacentes.
